Europäisches Patentamt

European Patent Office

Office européen des brevets

(11) Veröffentlichungsnummer: **0 116 321**
**B1**

(12) **EUROPÄISCHE PATENTSCHRIFT**

(45) Veröffentlichungstag der Patentschrift: **28.09.88**

(21) Anmeldenummer: **84100730.5**

(22) Anmeldetag: **25.01.84**

(51) Int. Cl.⁴: **G 01 N 21/35,** G 01 N 21/47,
G 02 B 21/00

(54) Infrarot-Spektrometer.

(30) Priorität: **31.01.83 DE 3303140**

(43) Veröffentlichungstag der Anmeldung:
**22.08.84 Patentblatt 84/34**

(45) Bekanntmachung des Hinweises auf die
Patenterteilung:
**28.09.88 Patentblatt 88/39**

(84) Benannte Vertragsstaaten:
**DE FR GB**

(56) Entgegenhaltungen:
FR-A-2 524 982
GB-A-2 110 836
US-A-3 400 266
US-A-3 958 882
ANALYTICAL CHEMISTRY, Band 50, Nr. 13,
November 1978, Seiten 1906-1910, American
Chemical Society, US; M.P. FULLER u.a.:
"Diffuse reflectance measurements by infrared
Fourier transform spectrometry"
REVIEW OF SCIENTIFIC INSTRUMENTS, Band
47, Nr. 9, September 1976, Seiten 1193-1195,
American Institute of Physics, US; T.A.
DESSENT u.a.: "Microspecular reflectance
apparatus for use with Cary 14 or 17 series
spectrophotometers"

(73) Patentinhaber: **Bruker Analytische Messtechnik
GmbH
Silberstreifen
D-7512 Rheinstetten-Forchheim (DE)**

(72) Erfinder: **Simon, Arno, Dr.
Bergwaldstrasse 24
D-7505 Ettlingen 6 (DE)**
Erfinder: **Gast, Jürgen
Ebersteinstrasse 39
D-7512 Rheinstetten 3 (DE)**

(74) Vertreter: **Patentanwälte Kohler - Schwindling -
Späth
Hohentwielstrasse 41
D-7000 Stuttgart 1 (DE)**

(56) Entgegenhaltungen:
IBM TECHNICAL DISCLOSURE BULLETIN,
Band 25, Nr. 2, Juli 1982, Seiten 706-707, New
York, US; W.J. NATTER: "Microscopic IRFT
detector"
REVIEW OF SCIENTIFIC INSTRUMENTS, Band
48, Nr. 4, April 1977, Seiten 395-398, American
Institute of Physics, US; B. WELBER: "Microoptic system for reflectance measurements at
pressures to 70 kilobar"

**Beschreibung**

Die Erfindung betrifft ein Infrarot-Spektrometer mit ersten optischen Mitteln zum Fokussieren eines Infrarot-Lichtstrahles auf einen mindestens näherungsweise punktförmigen Bereich einer probe und mit zweiten optischen Mitteln zum Fokussieren des von der Probe reflektierten infraroten Lichtstrahles auf einen an eine Fourier-Transformations-Einheit angeschlossenen Detektor.

Ein derartiges Infrarot-Spektrometer ist aus der US—A—3 958 882 bekannt.

Das bekannte Infrarot-Spektrometer ist ein übliches Laboratoriums-Spektrometer mit modularen Einheiten, durch deren Austausch wahlweise Transmissions- oder Reflexionsmessungen möglich sind. In dieses Laboratoriums-Spektrometer mit erheblichen Abmessungen werden die Proben üblicherweise von oben in lotrechter Position eingesetzt und alsdann unter völligem Lichtabschluß mit dem Infrarot-Lichtstrahl beaufschlagt. Das Volumen der Probe ist in diesen Fällen, verglichen mit dem Durchmesser des auftreffenden Infrarot Lichtstrahles verhältnismäßig groß, und die Probe ist homogen, so daß es in weiten Bereichen unbeachtlich ist, an welcher Stelle der Probe der Infrarot-Lichtstrahl auf die Probe auftrifft.

Das bekannte Spektrometer ist damit ungeeignet, um Messungen an definierten Oberflächenbereichen oder -punkten von Proben vorzunehmen. Für derartige Messungen besteht jedoch ein beträchtliches Bedürfnis, weil beispielsweise Halbleiterbauelemente oder andere Gegenstände mit definiert gestalteter Oberfläche einer präzisen punktweisen Untersuchungsmöglichkeit bedürfen.

Aus einer Firmenschrift "The Nanospec/20 IR" der Firma Nanometrics ist darüber hinaus eine Infrarot-Meßanordnung bekannt, mit der sog. "Mikromessungen" möglich sind. Dabei beleuchtet ein Nernst-Stift über einen Strahlengang, der verschiedene Spiegelobjektive und Ablenkspiegel umfaßt und mit einer Lochplatte unterbrechbar sowie einer gestuften Filterscheibe beeinflußbar ist, eine in zwei Koordinaten verstellbare Ebene, auf der eine Probe angeordnet werden kann. Dabei wird das Licht des Nernst-Stiftes auf einen Punkt der probe fokussiert, das die probe durchsetzende Licht gebündelt und wiederum auf einen Detektor fokussiert. Zwischen den Elementen zur Bündelung des transmittierten Lichtes und dem Detektor befindet sich ein Umlenkspiegel, der eine rechteckförmige Öffnung aufweist, durch die das Licht von der Probe auf den Detektor gelangt. Der Spiegel mit der rechteckförmigen Öffnung kann über ein Okular visuell betrachtet werden, wobei der Punkt, auf den das Licht in der Probe fokussiert wird, im Bereich der rechteckförmigen Öffnung liegt und somit nicht visuell betrachtet werden kann.

Auf diese Weise sind zwar Untersuchungen an mikroskopisch punktförmigen Bereichen einer Probe möglich, die bekannte Anordnung hat jedoch den Nachteil, daß sie lediglich für Transmissionsmessungen geeignet ist, so daß nur solche Proben einer Untersuchung mit der bekannten Anordnung zugänglich sind, die für Infrarot-Licht hinreichend durchlässig sind.

Ein weiterer Nachteil der bekannten Anordnung liegt darin, daß der zu untersuchende Punkt der Probe gerade nicht visuell betrachtet werden kann, so daß durch Verschieben der Probenebene der zu untersuchende punkt "blind" angefahren werden muß.

Ein weiterer Nachteil der bekannten Einrichtung ist, daß durch die im Strahlengang befindliche Filterscheibe nur eine sehr begrenzte Auflösung möglich ist, da diese Filterscheibe ein sogenanntes "Keilfilter" darstellt, bei dem sich der Durchlaßbereich über dem Filterumfang kontinuierlich ändert. Damit hängt die erzielbare Auflösung von der verwendeten Spaltbreite ab und wird umso schlechter, je breiter der Spalt ist. Andererseits nimmt die Signalamplitude aber mit der Spaltbreite zu, so daß an bestimmten Substanzen, bei denen eine hohe Spaltbreite aufgrund der zu erzielenden Signalamplitude erforderlich ist, nur eine schlechte Auflösung erzielbar ist. Typischerweise liegt nämlich die Auflösung bei derartigen Keilfiltern in der Größenordnung von einigen Promille bis 1% der Bandbreite des verwendeten Filters.

Diese bei der bekannten Einrichtung erzielbare Bandbreite ist jedoch vollkommen unzureichend für die Messung von Gasen und von anorganischen Materialien.

Ein weiterer Nachteil der bekannten Einrichtung ist, daß aufgrund der verwendeten Meßmethode einer dispersiven Messung die Spektrallinien langsam nacheinander abgetastet werden müssen, so daß pro Zeiteinheit nur eine relativ schlechte Signalausbeute möglich ist.

Schließlich hat die bekannte Anordnung noch den wesentlichen Nachteil, daß vor jeder Messung eine Eichung des aufgenommenen Spektrums erforderlich ist, um die gemessenen Spektrallinien einer Wellenzahlen-Skala zuordnen zu können.

Der Erfindung liegt demgegenüber die Aufgabe zugrunde, ein Infrarot-Spektrometer der eingangs genannten Art dahingehend weiterzubilden, daß eine große Vielfalt von Probensubstanzen an definierten Punkten ihrer Oberfläche mit hochgenauer Meßtechnik untersucht werden kann.

Diese Aufgabe wird bei einer Spektrometer der eingangs genannten Art erfindungsgemäß dadurch gelöst, daß eine auf die Probe gerichtete Quelle sichtbaren Lichtes vorgesehen ist und daß dritte optische Mittel vorgesehen sind, die einen in den von der Probe reflektierten Lichtstrahl einschaltbaren Ablenkspiegel aufweisen und in dessen eingeschalterer Stellung den punktförmigen Bereich in einem Okular abbilden.

Die der Erfindung zugrundeliegende Aufgabe wird hierdurch vollkommen gelöst, weil die üblicherweise feste Probe in das nach Art eines Mikroskops ausgebildete Spektrometer eingesetzt und dort zunächst optisch unter erheblicher Vergrößerung betrachtet werden kann, um den interessierenden Meßpunkt bzw. Meßereich auszuwählen. Durch den eingeschalteten Ablenkspiegel kann auf diese Weise ein Strahlengang wie bei einem Mikroskop erreicht werden, und es ist eine hochgenaue Positionierung der probe im Strahlengang der optischen Mittel möglich. Durch das Entfernen des Ablenkspiegels wird nun der gesamte Strahlengang für die Infrarot-Messung frei, die präzise an dem Punkt ausgeführt wird, der zuvor der optischen Betrachtung unterzogen war. Der voll ausnutzbare Strahlungsquerschnitt ergibt zusammen mit der verwendete Fourier-Transformations-Technik ein hochempfindliches und hochaufgelöstes Meßergebnis.

Unter "Licht" wird im folgenden jedwede im vorliegenden Zusammenhang nutzbare elektromagnetische Strahlung verstanden, also auch solche im nicht-sichtbaren Bereich, unter "mindestens näherungsweise punktförmig" soll ein Bereich von ca. 20 µm bis 1 mm Durchmesser verstanden werden.

Das erfindungsgemäße Spektrometer hat weiter den erheblichen Vorteil, daß eine große Vielfalt von Probenarten ausgemessen werden kann, beispielsweise in der Halbleitertechnologie, weil erstmals mit dem erfindungsgemäßen Spektrometer Fehlstellen an Substrat- oder Halbleiteroberflächen im mikroskopischen Bereich punktuell ausgemessen werden können. Eine weitere wichtige Anwendung des erfindungsgemäßen Spektrometers liegt in der forensischen Analytik, d.h. der kriminaltechnischen Untersuchung von Proben, beispielsweise Fingerabdrücken und dergleichen. Befinden sich diese unmittelbar auf einer lichtundurchlässigen Unterlage, ist eine Ausmeesung nur im Reflexionsverfahren möglich.

Bei einer Ausführungsform der Erfindung wird auf der probe ein Zwischenfokus abgebildet, wobei vorzugsweise im Bereich des Zwischenfokus eine einstellbare Blendenöffnung vorgesehen wird. Auf diese Weise ist eine besonders präzise punktweise Einstrahlung des Infrarot-Lichtes auf die Probe möglich, so daß besonders selektive Messungen erzielt werden können.

Zweckmäßigerweise kann je nach gewünschter Selektivität eine unterschiedliche Blendenöffnung gewählt werden, in dem beispielsweise fest eingestellte Lochblenden ausgewechselt werden oder an sich bekannte kontinuierlich variable Lochblenden verwendet werden. Diese können einmal einen kreisförmigen Querschnitt haben, wie man dies aus der photographischen Apparatetechnik kennt, zum anderen sind jedoch auch gekreuzte Schlitzblenden verwendbar, die eine rechteckförmige Blendenöffnung ergeben. Die Auswahl der Größe und/oder Form der Blende hängt dabei davon ab, was für ein punktförmiger Bereich an der Probe untersucht werden soll.

Die Zwischenfokussierung kann in bevorzugter Ausgestaltung der Erfindung besonders einfach dadurch vorgenommen werden, daß ein Kollimatorspiegel den von der Infrarot-Lichtquelle, kommenden, üblicherweise parallel ausgerichteten Lichtstrahl fokussiert.

Zur Fokussierung des aus der Blende austretenden, divergierenden Strahlenbüschels wird in einer Ausgestaltung der Erfindung ein Spiegelobjektiv verwendet, das eine besonders gute Abbildung des Zwischenfokus in der Weise gestattet, daß ein punktförmiger Bereich mit besonders kleinen Abmessungen ausgeleuchtet wird.

Anstelle eines Spiegelobjektivs kann selbstverständlich auch ein Linsensystem verwendet werden, sofern dieses für Infrarot-Licht geeignete optische Eigenschaften aufweist.

In alternativen Ausgestaltungen der Erfindung kann das auf die Probe auftreffende konvergierende Strahlenbüschel eine zur Probencberfläche rechtwinklige oder schiefwinklige Ausrichtung aufweisen. Bei rechtwinkliger Ausrichtung wird dabei im wesentlichen das direkt reflektierte Licht erfaßt, während bei der schiefwinkligen Ausrichtung ohne das Vorsehen weiterer optischer Mittel das diffus reflektierte Licht erfaßt wird.

In beiden Fällen wird in bevorzugter Ausgestaltung der Erfindung eine Anordnung der optischen Mittel gewählt, bei der einige der optischen Mittel sowohl zur Einstrahlung des Lichtes auf die Probe wie auch zum Auffangen des von der Probe reflektierten Liches dienen. Dies ergibt einen besonders kompakten und hinsichtlich der Anzahl der verwendeten Bauelemente wirtschaftlichen Aufbau.

Die Trennung des reflektierten Lichtes vom eingestrahlten Licht erfolgt in einer Ausführungsform der Erfindung dadurch, daß das reflektierte Licht unmittelbar vor dem Auftreffen auf die Blendenöffnung von einem Umlenkspiegel und einem Kollimatorspeigel auf einen Detektor fokussiert wird.

Erfindungsgemäß kann statt eines Umlenkspiegels jedoch auch ein schwenkbarer Strahlenteiler vorgesehen sein, dies hat gegenüber einem schwenkbaren Umlenkspiegel den Vorteil, daß die Lichtverluste geringer sind.

Man kann aber auch in weiterer Ausgestaltung der Erfindung vorsehen, daß die Spiegeloptik der ersten optischen Mittel ein erstes Spiegelobjektiv zum Parallelisieren des aus der Blendenöffnung austretenden divergierenden Strahlenbüschels sowie ein zweites Spiegelobjektiv zum Fokussieren des parallelisierten Strahlenbüschels umfassen, wobei die zweiten optischen Mittel einen im parallelisierten Strahlenbüschel angeordneten, vorzugsweise um eine außerhalb des parallelisierten Strahlenbüschels liegende Achse schwenkbaren Umlenkspiegel zum Umlenken des vom zweiten Spiegelobjektiv in Richtung der Blendenöffnung reflektierten Lichtes aufweisen.

Diese Maßnahme hat den Vorteil, daß nicht in der Nähe der Blendenöffnung ein Lichtstrahl umgelenkt wird, also in einem Bereich, in dem das Strahlenbüschel bereits weitgehend fokussiert ist und daher mit kleinen Spiegeln mechanisch präzise gearbeitet werden muß, sondern daß in einem Zwischenschritt ein parallelisiertes Strahlenbüschel erzeugt wird, das genügend breit eingestellt werden kann, so daß die Umlenkung einfach bewerkstelligt werden kann.

Alternativ hierzu kann jedoch auch ein ringförmiger Spiegel verwendet werden, der zur optischen Achse geneigt im Bereich zwischen Probe und Blendenöffnung angeordnet ist. Mit einem derartigen ringförmigen Spiegel wird dabei im wesentlichen die diffus reflektierte Strahlung erfaßt. Das vom Ringspiegel umgelenkte Strahlenbüschel gelangt vorzugsweise über einen Umlenkspiegel auf einen Detektor.

In einer weiteren Ausgestaltung der Erfindung kann das diffus reflektierte Licht auch durch einen Spiegel erfaßt werden, der sich im Dunkelraum des Spiegelobjektivs befindet, das das Infrarotlicht auf die Prcbe fokussiert. Bevorzugt wird das vom Umlenkspiegel umgelenkte Strahlenbüschel über einen Kollimatorspiegel auf einen Detektor fokussiert.

Zur Betrachtung durch mehrere Personen wird in bevorzugter Ausgestaltung der Erfindung eine Projektionsscheibe verwendet, insbesondere eine Mattscheibe. Dies eröffnet auch die Möglichkeit, den zu untersuchenden Probenbereich zu Dokumentationszwecken photographieren zu können.

In weiterer Ausgestaltung der Erfindung kann alternativ oder zusätzlich eine elektronische Einrichtung zum visuellen Betrachten vorgesehen sein, beispielsweise durch ein Ladungsverschiebeelement (CCD), das eine zeilenweise optische Erfassung eines Bildes gestattet, so daß der betrachtete und untersuchte, mikroskopisch punktförmige Probenbereich auf einem üblichen Fernsehmonitor betrachtet und mit an sich bekannten Video-Speichermitteln dokumentiert werden kann.

Zur Auskopplung des für die dritten optischen Mittel zum visuellen Betrachten erforderlichen Strahles aus dem Strahlengang können entweder undurchlässige oder halbdurchlässige Spiegel verwendet werden. Je nach Position des Spiegels sind die undurchlässigen Spiegel dabei zweckmäßigerweise schwenkbar ausgebildet, so daß sie aus dem Strahlengang herausgeschwenkt werden können. Bei bestimmten Messungen empfiehlt sich dies auch für halbdurchlässige Spiegel, da diese zwar an sich durchlässig sind, jedoch einen erheblichen Verlust an Strahlungsintensität mit sich bringen, was bei einigen Messungen unerwünscht ist.

Der Ablenkspiegel zum Auskoppeln eines Strahles für die dritten optischen Mittel kann dabei einmal unmittelbar im Eingangsbereich, nämlich hinter dem ersten Kollimatorspiegel angeordnet sein, es ist jedoch ebenso gut möglich, diesen Ablenkspiegel erst hinter der Blendenöffnung anzuordnen oder bei Verwendung eines weiteren Spiegelobjektivs oberhalb der Probenoberfläche hinter diesem Spiegelobjektiv und dem zugehörigen Detektor.

Zur visuellen Betrachtung des untersuchten punktförmigen Bereiches kann einmal das von der Infrarot-Lichtquelle ausgestrahlte Licht verwendet werden, sofern dieses im sichtbaren Bereich liegende Komponenten aufweist. Bei Verwendung eines elektronischen lichtelektrischen Wandlers der obengenannten Art besteht dieses Erfordernis dann nicht, wenn der Wandler im Infrarot-Bereich arbeiten kann.

In weiterer Ausgestaltung der Erfindung ist es jedoch auch möglich, die Probe an ihrer Oberfläche mit einer externen Lichtquelle, die im sichtbaren Bereich strahlt, zu beleuchten. Es versteht sich dabei, daß die spektrale Verteilung dieser Lichtquelle dann so gewählt wird, daß eine möglicher' weise parallel ablaufende Infrarot-Messung dadurch nicht gestört wird. Die Lichtquelle kann aber auch während der Messung abschaltbar sein, um Störungen zu verhindern.

Besonders flexible Messungen sind in bevorzugter Ausgestaltung der Erfindung dadurch möglich, daß die optischen Elemente, insbesondere die Spiegelobjektive, Linsensysteme und/oder Kollimatorspiegel in mehrfacher, unterschiedlicher Ausführung vorhanden sind, wobei das jeweils gewünschte Element über einen Revolver oder eine Schlittenführung in den Strahlengang gebracht wird. Auf diese Weise kann eine Vielzahl von Abbildungsmaßstäben eingestellt werden, so daß je nach Wunsch größere oder kleinere punktförmige Bereiche untersucht werden können.

Besteht die Probe aus einem für Infrarot-Licht durchlässigen oder teilweise durchlässigen Material, kann parallel zu der genannten Reflexionsmessung eine Transmissionsmessung dann erfolgen, wenn in bevorzugter Ausgestaltung der Erfindung unterhalb der Probe weitere optische Mittel zum Empfangen des transmittierten Lichtes vorgesehen sind. Diese Anordnung ermöglicht zeit- und probenortgleiche Vergleichsmessungen in Reflexions- und Transmissionsanordnung.

Bei derartigen Transmissionsmessungen werden bevorzugt die im Strahlengang befindlichen halbdurchlässigen Spiegel aus dem Strahlengang herausgeklappt, um den eingestrahlten Lichtstrahl nicht zu sehr zu schwächen.

Die Abmessungen des "punktförmigen" Bereiches sind im wesentlichen bei Punktmessungen durch die Auflösung der Optik, beispielsweise auf einen Wert 20µm, festgelegt. Darüber hinaus ist es erfindungsgemäß aber auch möglich, statt einer möglichst punktförmigen Bestrahlung der Probe einen kleinen näherungsweise Punktförmigen Bereich zu untersuchen, typischerweise mit einem Durchmesser von weniger als 1 mm.

Vorzugsweise wird dieser Bereich mit endlichen Abmessungen auf eine Mehrzahl von Detektorelementen, entweder eine Reihe von Detektorelementen oder auf einen Flächendetektor mit einer Matrix von Detektorelementen abgebildet, die integrierend oder selektiv mittels einer Auswerteinrichtung abfragbar sind. Bei dieser Variante der Erfindung können die von der Matrix erfaßten Meßwerte gesamthaft oder ausschnittsweise auf einem Monitor dargestellt werden. Auch eine gleichzeitige Auswertung mehrerer Meßpunkte ist erfindungsgemäß möglich.

Die vorstehend genannten Maßnahmen haben den wesentlichen Vorteil, daß ein Meßpunkt nicht exakt eingestellt werden muß, sondern daß man mit rein elektronischen Mitteln eine Auswahl aus den Meßpunkten der Matrix vornehmen kann, ohne daß für diesen Wechsel des Meßpunktes innerhalb der Matrix eine mechanische Verschiebung der Probe oder der Meßeinrichtung erforderlich ist.

Die erfindungsgemäß verwendete Reflexions-Meßmethode an punktförmigen Probenbereichen führt natürlicherweise zu einer geringen Signalamplitude da je nach Reflexionskoef-fizient des untersuchten Probenmateriales und Oberflächenbeschaffenheit nur ein geringer Teil des auftreffend Lichts reflektiert wird und in den Detektor gelangt. Bei solchen Messungen mit niedrigen Signalpegeln wird daher in besonders bevorzugter Ausgestaltung der Erfindung ein Meßverfahren unter Anwendung der Fourier-Transformation verwendet. Bei diesem Verfahren werden im Gegensatz zu der eingangs beschriebenen dispersiven Messung der bekannten Anordnung sämtliche Spektrallinien gleichzeitig angeregt und das zu messende Spektrum wird durch eine Umrechnung vom Zeitbereich in den Frequenzbereich gewonnen. Hierdurch wird einmal pro Zeiteinheit der Messung eine wesentlich höhere Signalausbeute erzielt, so daß sich in derselben Meßzeit ein wesentlich höheres Signal/Rauschverhältnis bei den Messungen erzielen läßt. Auch ist aufgrund der gleichzeitigen Anregung sämtlicher Meßfrequenzen die Gestalt des Querschnittes des verwendeten Strahlungsbüschels unkritisch, da nicht—wie bei dem bekannten Spektrometer—unterschiedliche Durchlässigkeitsbereiche eines Keilfilters beaufschlagt werden. Damit lassen sich bei Verwendung des FT-Verfahrens sehr hohe Auflösungen erzielen, die auch Messungen an Gasen und anorganischen Materialien mit hoher Präzision ermöglichen. Das FT-Verfahren ermöglicht auch bei kleinsten Signalpegeln Messungen mit besonders hohem Signal/Rauschverhältnis. Auf diese Weise können die bei Reflexionsmessungen von punktförmigen Bereichen natürlicherweise vorhandenen Nachteile, nämlich die geringe Signalausbeute, wirkungsvoll ausgeglichen werden, so daß insgesamt eine besonders effektive und vom Einsatzbereich her vielseitige Meßmethode mit der Erfindung zur Verfügung steht.

Weitere Vorteile ergeben sich aus der Beschreibung und der beigefügten Zeichnung.

Die Erfindung ist in der Zeichnung dargestellt und wird in der nachfolgenden Beschreibung näher erläutert. Es zeigen:

Fig. 1 einen Strahlengang bei einer ersten Ausführungsform eines erfindungsgemäßen Spektrometers;

Fig. 2 einen vergrößerten Ausschnitt aus dem Blendenbereich des Strahlenganges gemäß Fig. 1;

Fig. 3 eine Variante der Ausführungsform gemäß Fig. 1 unter Verwendung eines Strahlenteilers statt eines Klappspiegels;

Fig. 4 eine weitere Variante der Ausführungsform gemäß Fig. 1, bei der in einem Zwischenschritt ein parallelisiertes Strahlenbüschel erzeugt wird;

Fig. 5 einen Strahlengang eines zweiten Ausführungsbeispieles eines erfindungsgemäßen Spektrometers;

Fig. 6 einen Strahlengang eines dritten Ausführungsbeispieles eines erfindungsgemäßen Spektrometers;

Fig. 7 eine schematische Darstellung zur Erläuterung des beim Strahlengang gemäß Fig. 6 verwendeten Ringspiegels;

Fig. 8 einen Strahlengang eines vierten Ausführungsbeispieles eines erfindungsgemäßen Spektrometers;

Fig. 9 einen Strahlengang eines fünften Ausführungsbeispieles eines erfindungsgemäßen Spektrometers, das gleichzeitig Reflexionsund Transmissionsmessungen zuläßt.

Fig. 10a einen Strahlengang eines sechsten Ausführungsbeiund 10b spieles eines erfindungsgemäßen Spektrometers, bei dem ein flächenhafter Bereich mit endlichen Abmessungen untersucht wird.

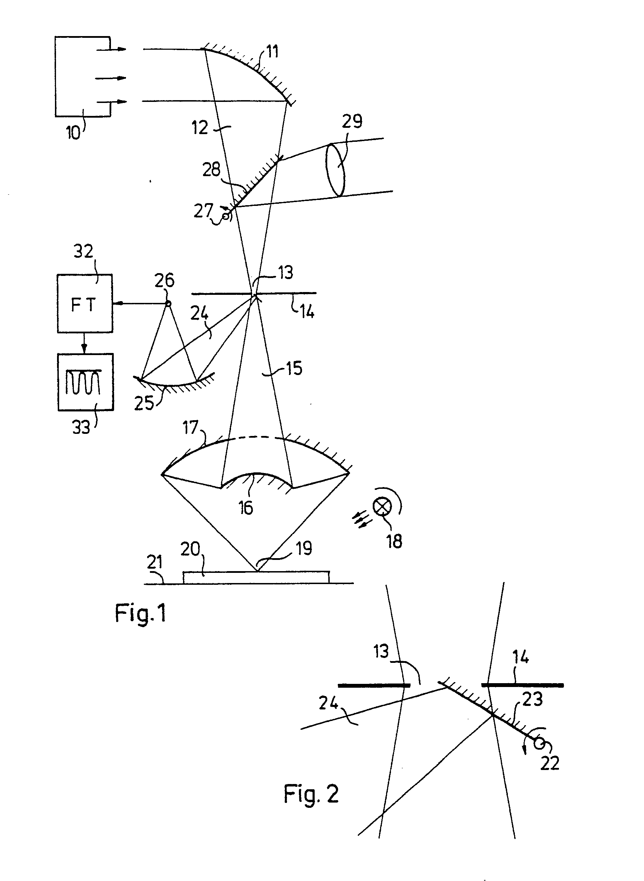

Bei dem in Fig. 1 dargestellten Strahlengang eines ersten Ausführungsbeispieles eines erfindungsgemäßen Spektrometers bezeichnet 10 eine Infrarot-Lichtquelle, die einen im wesentlichen parallelen Lichtstrahl aussendet. Dieser parallele Lichtstrahl gelangt auf einen Kollimatorspiegel 11 und wird über diesen in ein konvergierendes Strahlenbüschel 12 umgelenkt. Das Strahlenbüschel 12 ist auf eine Blendenöffnung 13 in einer Platte 14 fokussiert. Die Blendenöffnung 13 wird dabei im einfachsten Falle durch eine Öffnung in der Platte 14 dargestellt, es ist jedoche auch möglich, eine Variation der Blendenöffnung 13 vorzunehmen. Dies kann einmal dadurch geschehen, daß ein Satz von fest eingestellten Blenden mit unterschiedlichen Blendenöffnungen zur Verfügung steht und diese Blenden ausgetauscht werden. Zum anderen können auch kontinuierlich einstellbare Blenden verwendet werden, beispielsweise solche mit kreisförmigem Querschnitt und radial beweglichen Segmenten oder solche mit rechteckförmigem Querschnitt, die dadurch entstehen, daß zwei Schlitzblenden unter rechtwinkliger Ausrichtung zueinander hintereinander angeordnet sind.

Nach Durchlaufen der Blendenöffnung 13 trifft das nunmehr divergierende Strahlenbüschel 15 auf ein Spiegelobjektiv 16, 17, das das einfallende divergierende Strahlenbüschel 15 auf einen punktförmigen Bereich 19 einer Probe 20 fokussiert, die auf einer Unterlage 21 angeordnet ist.

Die Probe 20 wird dabei in einer Ausgestaltung der Erfindung noch von einer Lichtquelle 18, die im sichtbaren Bereich strahlt, beleuchtet, wobei die Lichtquelle 18 vorzugsweise während der Messung abschaltbar ist.

Das von der Probe 20 direkt reflektierte Licht nimmt aufgrund der senkrechten Ausrichtung der Achse des auf die Probe 20 fokussierten Strahlenbüschels zur Probenoberfläche den oben beschriebenen Weg wieder zurück und trifft dabei wie man im einzelnen aus Fig. 2 ersieht auf sinen unmittelbar vor der Blendenöffnung 13 angeordneten, vorzugsweise um eine Achse 22 schwenkbaren Umlenkspiegel 23. Der Umlenkspiegel 23 bedeckt beispielsweise 50% der Blendenöffnung 13 und reflektiert das auf ihn vom Spiegelobjektiv 16, 17 einfallende Licht in ein divergierendes Strahlenbüschel 24, das über einen Kollimatorspiegel 25 auf einen Detektor 26 fokussiert wird. Es versteht sich, daß bei diesem, wie auch bei den folgenden Ausführungsbeispielen statt eines schwenkbaren auch ein verschiebbarer Umlenkspiegel verwendet werden kann.

Dieser Detektor 26 setzt nun das auf ihn einfallende Meßlicht in ein entsprechendes elektrisches Signal um und führt dieses einem Rechner 32 zu, der bevorzugt mit Hilfe der Fourier-Transformation (FT) arbeitet. Darüber hinaus ist an den Rechner 32 noch ein Display 33 angeschlossen, auf dem das gemessene Infrarot-Spektrum betrachtet, ausgeschrieben oder sonstwie dokumentiert werden kann. Beispielsweise kann das Display 33 ein Bildschirm oder ein Schreiber sein.

Schließlich ist im Bereich zwischen Blendenöffnung 13 und Kollimatorspiegel 11 noch ein vorzugsweise um eine Achse 27 schwenkbarer Umlenkspiegel 28 vorhanden, der das vom Spiegelobjektiv 16, 17 einfallende Strahlenbüschel umlenkt und einer Betrachtungseinheit zur visuellen Betrachtung zuführt, wie sie durch die Linse 29 angedeutet ist.

Wie man aus dem Strahlengang von Fig. 1 ohne weiteres erkennen kann, wird die Lochblende 13 mit dem Abbildungsmaßstab des Spiegelobjektivs 16, 17 auf die Probe 20 abgebildet. Bei einer typischen Ausführungsform hat das Spiegelobjektiv 16, 17 einen Abbildungsmaßstab von 15, so daß eine Blendenöffnung von 1 mm Durchmesser zu einem punktförmigen Bereich 19 führt, der nur einen Durchmesser von 70 µm hat. Die Abbildung der Blendenöffnung 13 führt damit zu extrem kleinen punktförmigen Bereichen 19 und damit zu einer hohen räumlichen Auflösung bei der punktförmigen Messung an der Probe 20.

Die Blendenöffnung 13 definiert über die genannte Abbildung damit einmal den punktförmigen Bereich 19 auf der Probe 20, sie definiert aber gleichermaßen den über die Linse 29 visuell betrachtbaren Bereich, so daß Meßbereich und Beobachtungsbereich bei der erfindungsgemäßen Anordnung grundsätzlich identisch sind.

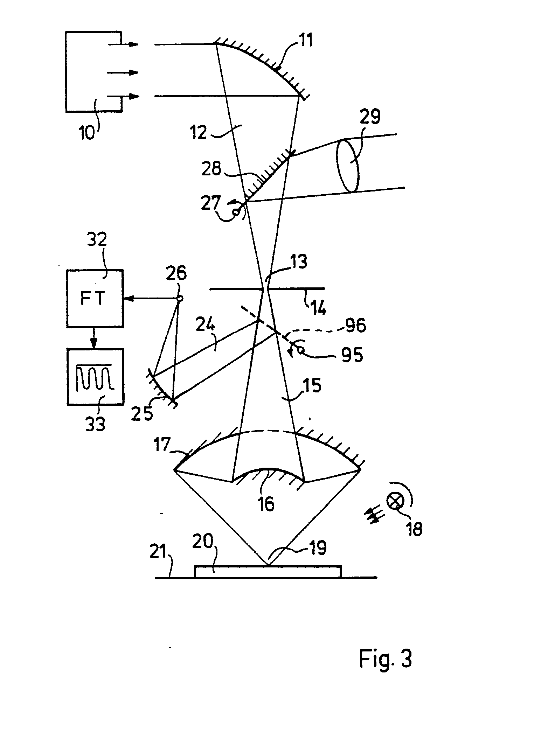

Das Ausführungsbeispiel gemäß Fig. 3 unterscheidet sich von demjenigen gemäß Fig. 1 und 2 dadurch, daß anstelle des um die Achse 22 schwenkbaren Umlenkspiegels 23 ein um eine Achse 95 schwenkbarer Strahlenteiler 96 vorgesehen ist. Der Strahlenteiler 96 befindet sich zwar ebenfalls in der Nähe der Blendenöffnung 13, nicht jedoch so nahe daran, wie dies beim Umlenkspiegel 23 in den Fig. 1 und 2 der Fall war.

Der Strahlenteiler 96 reflektiert beispielsweise 50 % des auf ihn vom Spiegelobjektiv 16, 17 einfallenden Lichtes wiederum in das divergierende Strahlenbüschel 24, das über den Kollimatorspiegel 25 auf den Detektor 26 fokussiert wird.

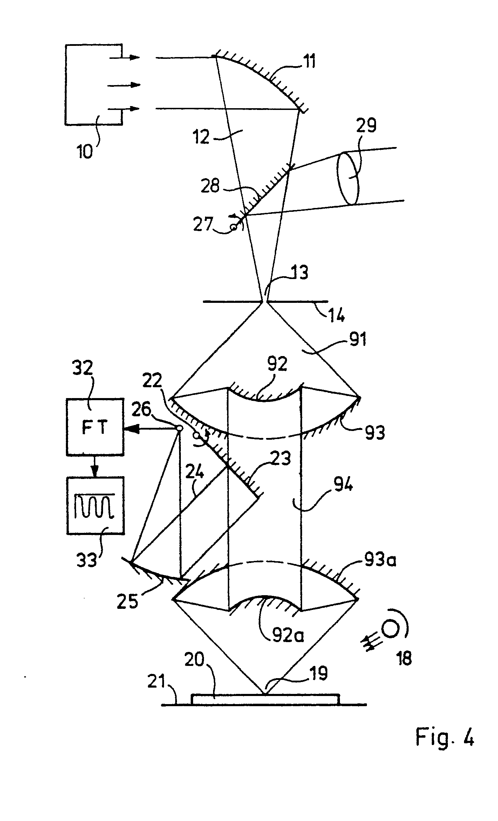

Fig. 4 zeigt eine weitere Variante, bei der dem Problem des geringen zur Verfügung stehenden Raumes in unmittelbarer Nähe der Blendenöffnung 13 dadurch Rechnung getragen wird, daß nach Durchlaufen der Blendenöffnung 13 das nunmehr divergierends Strahlenbüschel 91 auf ein Spiegelobjektiv 92, 93 trifft, welches das divergierende Strahlenbüschel 91 in ein parallelisiertes Strahlenbüschel 94 überführt. Dieses trifft auf ein komplementäres Spiegelobjektiv 92a, 93a, das die Strahlung wiederum auf den wenigstens näherungsweise punktförmigen Bereich 19 der Probe 20 fokussiert.

Das von der Probe 20 direkt reflektierte Licht nimmt in der weiter oben bereits beschriebenen Weise nun seinen Weg wieder zurück und trifft dabei auf den nunmehr vor dem Spiegelobjektiv 92, 93 angeordneten und vorzugsweise um eine Achse 22 außerhalb des parallelisierten Strahlenbüschels 94 schwenkbaren Umlenkspiegel 23. Der Umlenkspiegel 23 bedeckt bei dieser Variante beispielsweise 50 % des parallelisierten Strahlenbüschels 94 und reflektiert das auf ihn einfallende Licht in das divergierende Strahlenbüschel 24, das über dem Kollimatorspiegel 25 wiederum auf den Detektor 26 fokussiert wird.

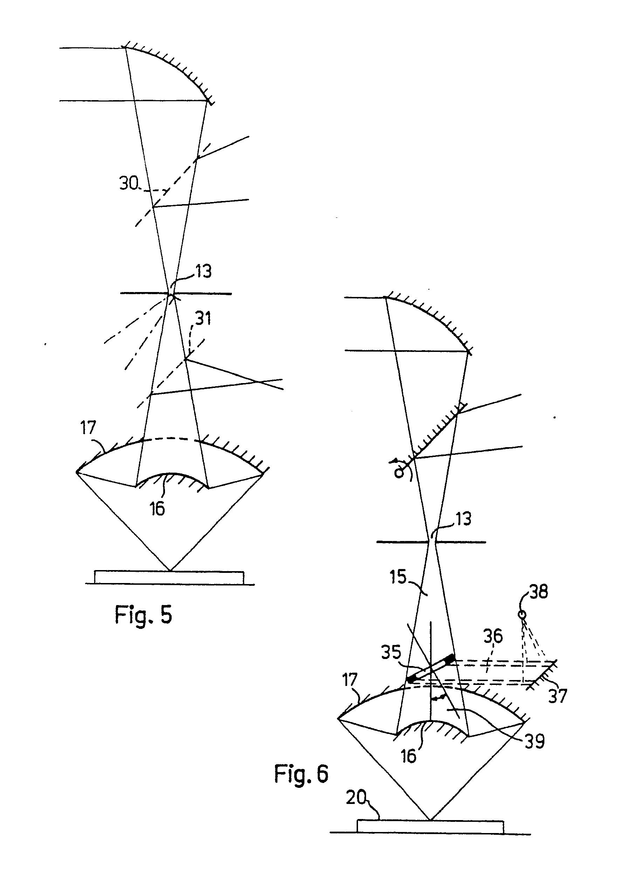

Beim Ausführungsbeispiel gemäß Fig. 5 wird zwar im Prinzip derselbe Strahlengang zum Einstrahlen des Infrarot-Lichtes und Erfassen des reflektierten Lichtes verwendet, lediglich die visuelle Betrachtung ist dadurch anders ausgebildet, daß anstelle des undurchlässigen Umlenkspiegels 28 gemäß Fig. 1 nunmehr ein halbdurchlässiger Spiegel 30, jedoch in derselben Position verwendet wird. Alternativ hierzu kann der halbdurchlässige Spiegel auch zwischen Blendenöffnung 13 und Spiegelobjektiv 16, 17 angeordnet sein, wie dies in Fig. 5 mit 31 angedeutet ist. Es versteht sich dabei, daß die optischen Mittel zum visuellen Betrachten entsprechend der Position der Spiegel 28, 30, 31 in an sich bekannter Weise gestaltet sind.

Beim Ausführungsbeispiel gemäß Fig. 6 wird demgegenüber eine Annordnung verwendet, mit der diffus von der Probe 20 reflektierte Strahlung empfangen und ausgewertet wird. Hierzu ist im Bereich des divergierenden Strahlenbüschels 15 zwischen Blendenöffnung 13 und Spiegelobjektiv 16, 17 ein Ringspiegel 35 angeordnet, dessen Achse zur Achse des Strahlenbüschels 15 um einen Winkel 39 geneigt verläuft. Das vom Ringspiegel 35 umgelenkte Strahlenbüschel 36 wird über einen Umlenkspiegel 37 auf einen Detektor 38 fokussiert.

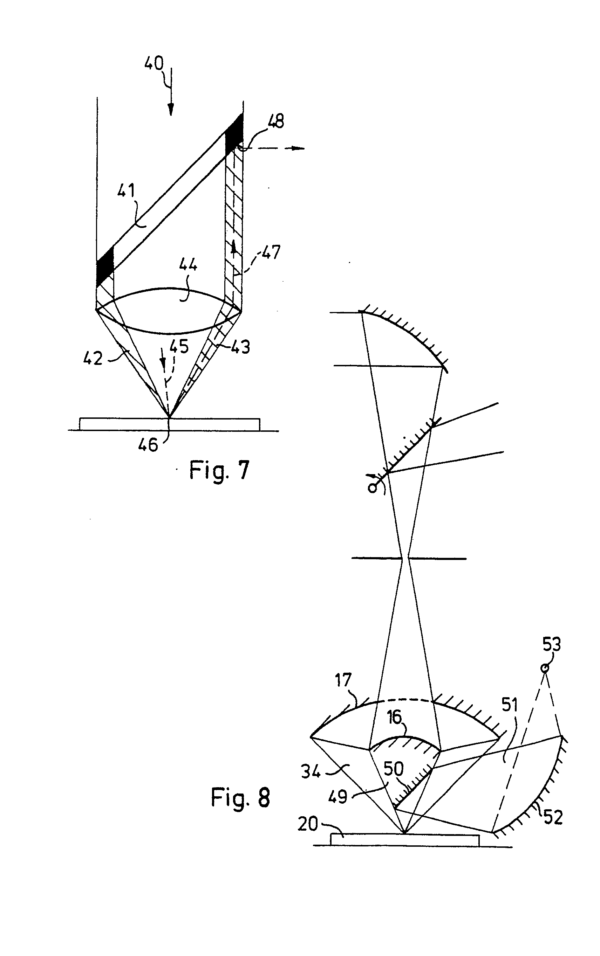

Zur Erläuterung der in Fig. 6 verwendeten Anordnung soll das vereinfachte Beispiel gemäß Fig. 7 dienen. Dabei ist ein parallel einfallender Strahl 40 vorgesehen, der teilweise von einem Ringspiegel 41 abgeschattet wird, so daß abgeschattete Bereiche 42, 43 entstehen. Die Achse des Ringspiegels 41 ist gegenüber der Achse des Strahles 40 wiederum geneigt. Der Strahl 40 gelangt auf eine Linse 44 und wird von dieser gebündelt, so daß der Strahl 40 auf einen wenigstens näherungsweise punktförmigen Bereich 46 einer Probe fokussiert wird. Ein außerhalb der Mittelachse schräg auf den Bereich 46 einfallender Strahl 45 wird dabei einmal direkt reflektiert und gelangt über den nicht abgeschatteten Bereich zurück, ein vom Bereich 46 diffus reflektierter Strahl 47 gelangt jedoch beispielsweise in den abgeschatteten Bereich 43 und von dort zur Unterseite des ringförmigen Spiegels 41, der an seiner dem Bereich 46 zugewandten Oberfläche 48 verspiegelt ist. Damit lenkt der ringförmige Spiegel 41 nur solche Strahlung aus der Richtung des Strahles 40 aus, die vom Bereich 46 der Probe diffus reflektiert wurde.

Auf demselben Vsrfahren beruht die Anordnung gemäß Fig. 6, bei der in genau entsprechender Weise, dabei jedoch über die Spiegeloptik 16, 17 der Ringspiegel 35 nur solche Strahlung in Gestalt des Strahlenbüschels 36 umlenkt, die von der Oberfläche der Probe 20 diffus reflektiert wurde, so daß nur diese diffus reflektierte Strahlung im Detektor 38 erfaßt wird.

Eine weitere Anordnung zur Messung diffus reflektierter Strahlung ist in Fig. 8 dargestellt. Bei dem dortigen Ausführungsbeispiel macht man sich die Tatsache zunutze, daß die Spiegeloptik 16, 17 ein Strahlenbüschel 34 auf die Probe 20 fokussiert, das im Querschnitt torusartig verläuft. Damit verbleibt im Zentrum dieses torusartigen Strahlenbüschels 34 ein sog. Dunkelraum 49. In diesen Dunkelraum 49 gelangt nur von der Probe 20 diffus reflektierte Strahlung, die dort über einen Umlenkspiegel 50 erfaßt und über einen Kollimatorspiegel 52 auf einen Detektor 53 fokussiert wird.

Wie man aus Fig. 8 erkennen kann, ist die dort dargestellte Anordnung auch vollkommen unabhängig, beispielsweise von der Anordnung gemäß Fig. 1 bis 5, so daß die Messung des diffus reflektierten Lichtes auch zusätzlich und sogar parallel zur Messung des direkt reflektierten Lichtes erfolgen kann, ohne diese in irgend einer Weise zu stören.

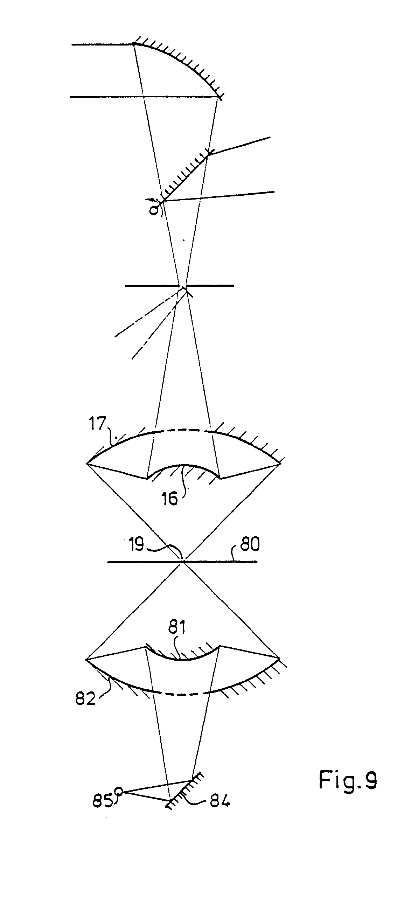

Bei der Anordnung gemäß Fig. 9 ist eine Anordnung gemäß Fig. 1 in der Weise erweitert, daß bei einer Probe 80, die für Infrarot-Licht teilweise oder vollkommen durchlässig ist, gleichzeitig auch Transmissionsmessungen möglich sind. Hierzu ist unterhalb der Probe 80 ein weiteres optisches System, bestehend beispielsweise aus einem Spiegelobjektiv 81, 82, vorgesehen, das das transmittierte Licht über einen Umlenkspiegel 84 auf einen Detektor 85 fokussiert.

Die Anordnung gemäß Fig. 9 gestattet damit die zeit- und probenortgleiche Messung in Reflexions- und Transmissions-anordnung.

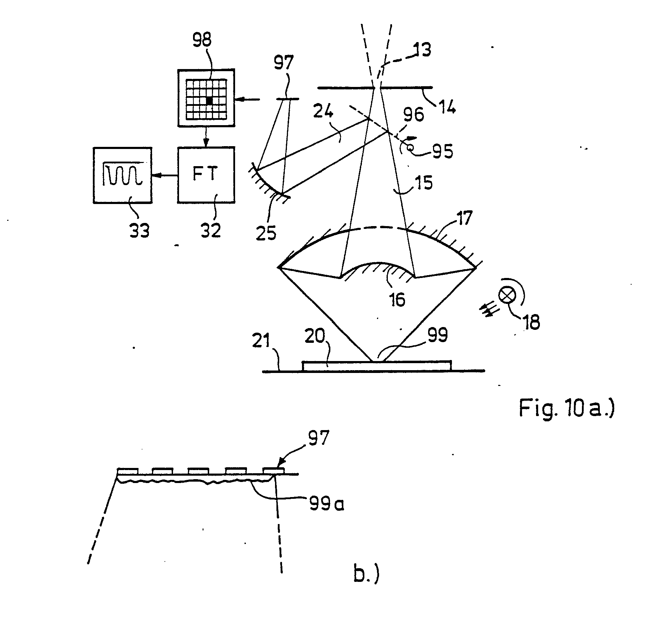

Schließlich zeigen die Fig. 10a und 10b noch ein weiteres Ausführungsbeispiel, bei dem ein Probenbereich 99 der Probe 20 untersucht wird, der endliche Abmessungen hat, beispielsweise bis ca. 1 mm Durchmesser.

Die Anordnung entspricht im übrigen derjenigen von Fig. 3, d.h. in dem von der Blendenöffnung 13 ausgehenden divergierenden Strahlenbüschel 15 befindet sich ein schwenkbarer Strahlenteiler 96.

Statt des bei den anderen Ausführungsbeispielen verwendeten Detektors 26 ist nunmehr jedoch ein Flächendetektor 97 vorgesehen, auf den der Kollimatorspiegel 25 den Probenbereich 99 abbildet, wie dies mit 99a in Fig. 10a angedeutet ist.

Der Flächendetektor 99 kann entweder als eine Reihe von Detektorelementen oder als zweidimensionale Matrix ausgebildet sein, wie dies mit 98 in Fig. 10a angedeutet ist. Bringt man die Meßwerte der Matrix 98 auf einen Monitorbildschirm, kann der Benutzer des erfindungsgemäßen Spektrometers einen der Meßpunkte auswählen, d.h. den Meßort innerhalb des Bereiches 99 optimieren, ohne daß es erforderlich ist, die Probe 20 relativ zum übrigen Spektrometer mechanisch zu verschieben. Auch ist es selbstverständlich möglich, integrierende oder gleichzeitig diskrete Messungen über eine d 8 d Mehrzahl der Detektorelemente er Matrix 9 oder über ie ganze Matrix 98 durchzuführen.

Bei den vorstehend geschilderten Ausführungsbeispielen wurden verschiedene optische Gruppen verwendet, nämlich zum Einstrahlen des Lichtes, zum Empfangen des reflektierten Lichtes, zum Empfangen des zur visuellen Betrachtung dienenden Lichtes, und schließlich zum Empfangen des transmittierten Liches. All diese optischen Mittel, undurchlässige oder halbdurchlässige, namlich Ablenk-oder Kollimatorspiegel, Spiegelobjektive oder Linsenobjektive, sind vorstehend bei den genannten Ausführungsbeispielen in jeweils einer bestimmten Kombination beschrieben worden. Es versteht sich jedoch, daß unterschiedliche Ausgestaltungen dieser Spiegel, Objektive oder Linsen auch in beliebigen anderen Kombinationen verwendet werden können, ohne den Bereich der vorliegenden Erfindung zu verlassen, beispielsweise indem zum Ablenken des reflektierten oder transmittierten Lichtes auf den jeweiligen Detektor statt der beschriebenen undurchlässigen Spiegel halbdurchlässige Spiegel verwendet werden.

So können beispielsweise entweder Spiegeloptiken, d.h. außeraxiale Spiegel oder Spiegelobjektive oder Linsenobjektive verwendet werden, sofern sich diese Linsenobjektive für den Infrarot-Bereich eignen. Bei mehreren verwendeten optischen Systemen können natürlich auch im einen Strahlengang ein Spiegelobjektiv und im anderen ein Linsenobjektiv verwendet werden.

Wie bereits zu den Ausführungsbeispielen erwähnt, können die verwendeten Umlenkspiegel, sei es zum Umlenken des erfaßten reflektierten Lichtes, sei es zum Umlenken des zur visuellen Betrachtung dienenden Lichtes, an verschiedenen Stellen des Strahlenganges angeordnet sein. Auch können je nach Zweckmäßigkeit undurchlässige oder halbdurchlässige Spiegel verwendet werden, wobei die undurchlässigen Spiegel zweckmaßigerweise um eine Achse schwenkar ausgebildet sind, so daß Betrachtung und Messung nacheinander möglich sind, falls diese Spiegel in der jeweils anderen Betriebsart stören. Darüber hinaus können aber auch die halbdurchlässigen Spiegel schwenkbar ausgebildet sein, wenn der bei diesen Spiegeln eintretende Verlust an Strahlungsleistung um ca. die Hälfte unerwünscht ist.

Zum visuellen Betrachten des jeweils ausgewählten mikroskopisch punktförmigen Probenortes kann im einfachsten Falle ein Okular dienen, mit dem eine einäugige Betrachtung des punktförmigen Probenortes möglich ist. Eine bessere Betrachtungsmöglichkeit ergibt sich jedoch bei Verwendung eines Binokulars.

Soll mehreren Personen die Betrachtung des punktförmigen Probenortes möglich sein oder ist eine photographische Dokumentation des Probenbereiches gewünscht, können die Mittel zum visuellen Betrachten auch als Projektionsscheibe oder Mattscheibe ausgebildet sein, wobei im Falle der photographischen Dokumentation an die Stelle der Mattscheibe ein photoempfindliches Material gebracht werden kann.

Eine besonders vielseitige Möglichkeit der visuellen Betrachtung, insbesondere auch im Hinblick auf eine Weiterverarbeitung der empfangenen Daten ist dann möglich, wenn das zur visuellen Betrachtung umgelenkte Licht einem lichtelektrischen Wandler zugeführt wird, der entsprechende elektrische Signale erzeugt, so daß das zu betrachtende Bild des punktförmigen Probenortes mit elektronischen Mitteln, beispielsweise auf einem Fernsehmonitor, dargestellt werden kann. Als lichtelektrischer Wandler eignet sich dabei insbesondere ein Ladungsverschiebeelement (CCD), wie es in modernen Fernsehkameras verwendet wird. Damit steht auch ein das betrachtete Bild wiedergebendes elektrisches Signal zur Verfügung, das sich besonders gut zur digitalen Speicherung und Weiterverarbeitung eignet.

Darüber hinaus hat die optoelektronische Signalverarbeitung bei der visuellen Betrachtung des Probenortes den Vorteil, daß auch solche lichtelektrischen Wandler verwendet werden können, die im Infrarot-Bereich arbeiten, wie sie beispielsweise bei Nachtsichtgeräten bekannt sind. Dann kann die visuelle Betrachtung des punktförmigen Probenortes über das ohnehin vorhandene Infrarot-Licht erfolgen, so daß die zusätzliche Beleuchtung über die Lichtquelle 18, die im sichtbaren Bereich leuchtet, entbehrlich ist.

Bei den vorstehend geschilderten Ausführungsbeispielen sind überdies die verwendeten optischen Elemente, nämlich Spiegel, Objektive usf. in jeweils einer fixen Position dargestellt. Es versteht sich, daß insbesondere zum Erreichen unterschiedlicher Abbildungsmaßstäbe aber auch solche Anordnungen verwendet werden können, bei denen diese optischen Elemente auf einem Revolver oder Schlitten in mehrfacher, unterschiedlicher Ausführung vorhanden sind und das jeweils gewünschte optische Element durch Verdrehen des Revolvers oder Verschieben des Spiegels in die Arbeitsposition gebracht werden kann.

## Patentansprüche

1. Infrarot-Spektrometer mit ersten optischen Mitteln (11, 14, 16, 17, 44, 81, 82, 92, 93, 92a, 93a) zum Fokussieren eines Infrarot-Lichtstrahles (12, 15, 34, 40, 45, 91, 94) auf einen mindestens näherungsweise punktförmigen Bereich (19; 46; 99) einer Probe (20; 80) und mit zweiten optischen Mitteln (16, 17, 23, 25, 35, 44, 48, 50, 52, 92a, 93a) zum Fokussieren des von der Probe (20, 80) reflektierten infraroten Lichtstrahles (12, 15, 36, 47, 51) auf einen an eine Fourier-Transformations-Einheit (32) angeschlossenen Detektor (26, 38, 53, 97), dadurch gekennzeichnet, daß eine auf die Probe (20, 80) gerichtete Quelle (18) sichtbaren Lichtes vorgesehen ist und daß dritte optische Mittel (27, 28, 29, 30, 31) vorgesehen sind, die einen in den von der Probe (20, 80) reflektierten Lichtstrahl (12, 15) einschaltbaren Ablenkiegel (28, 30, 31) aufweisen und in dessen eingeschalteter Stellung den punktförmigen Bereich (19, 46, 99) in einem Okular (29) abbilden.

2. Infrarot-Spektrometer nach Anspruch 1, dadurch gekennzeichnet, daß auf der Probe (20, 64) ein Zwischenfokus abgebildet wird.

3. Infrarot-Spektrometer nach Anspruch 2, dadurch gekennzeichnet, daß sich am Ort des Zwischenfokus eine einstellbare Blendenöffnung (13) befindet.

4. Infrarot-Spektrometer nach Anspruch 2 oder 3, dadurch gekennzeichnet, daß die ersten optischen Mittel einen Kollimatorspiegel (11) zum Fokussieren des von einer Lichtquelle (10) kommenden, parallel eintretenden Lichtes auf den Zwischenfokus aufweisen.

5. Infrarot-Spektrometer nach einem der Ansprüche 2 bis 4, dadurch gekennzeichnet, daß mindestens die ersten optischen Mittel, ferner eine Spiegeloptik, insbesondere ein Spiegelobjektiv (16, 17; 60, 61) zum Fokussieren des aus der Blendenöffnung (13) austretenden divergierenden Strahlenbüschels (15) auf die probe (20) aufweisen.

6. Infrarot-Spektrometer nach einem der Ansprüche 2 bis 4, dadurch gekennzeichnet, daß mindestens die ersten optischen Mittel ferner ein Linsensystem zum Fokusieren des aus der Blendenöffnung (13) austretenden divergierenden Strahlenbündels (15) auf die Probe (20) aufweisen.

7. Infrarot-Spektrometer nach einem der Ansprüche 1 bis 6, dadurch gekennzeichnet, daß die Achse des auf die Probe (20) auftreffenden Strahlenbüschels im wesentlichen rechtwinklig zur Probenoberfläche verläuft.

8. Infrarot-Spektrometer nach einem der Ansprüche 1 bis 6, dadurch gekennzeichnet, daß die Achse des auf die Probe (20) auftreffenden Strahlenbüschels im wesentlichen schiefwinklig zur Probenoberfläche verläuft.

9. Infrarot-Spektrometer nach einem der Ansprüche 5 bis 8, dadurch gekennzeichnet, daß einige der ersten optischen Mittel gleichzeitig als zweite optische Mittel dienen, insbesondere daß das von der Probenoberfläche reflektierte Licht von demselben Spiegelobjektiv (16, 17) bzw. Linsensystem aufgefangen wird, das zum Fokussieren des aus der Blendenöffnung (13) austretenden Strahlenbüschels (15) auf die Probe (20) dient.

10. Infrarot-Spektrometer nach einem der Ansprüche 1 bis 9, dadurch gekennzeichnet, daß die zweiten optischen Mittel einen hinter der Blendenöffnung (13) angeordneten, vorzugsweise um eine außerhalb des divergierenden Strahlenbüschels (15) liegende Achse (22) schwenkbaren Umlenkspiegel (23) zum Umlenken des vom Spiegelobjektiv (16, 17) bzw. Linsensystem in Richtung der Blendenöffnung (13) reflektierten Lichtes aufweisen.

11. Infrarot-Spektrometer nach einem der Ansprüche 1 bis 9, dadurch gekennzeichnet, daß die zweiten optischen Mittel einen hinter der Blendenöffnung (13) angeordneten, vorzugsweise um eine außerhalb des divergierenden Strahlenbüschels 15 liegende Achse (95) schwenkbaren Strahlenteiler (96) zum Umlenken des vom Spiegelobjektiv (16, 17) bzw. Linsensystem in Richtung der Blendenöffnung (13) reflektierten Lichtes aufweisen.

12. Infrarot-Spektrometer nach einem der Ansprüche 5 bis 9, dadurch gekennzeichnet, daß die Spiegeloptik der ersten optischen Mittel ein erstes Spiegelobjektiv (92, 93) zum Parallelisieren des aus der Blendenöffnung (13) austretenden divergierenden Strahlenbüschels (91) sowie ein zweites Spiegelobjektiv (92a, 93a) zum Fokussieren des parallelisierten Strahlenbüschels (94) umfassen und daß die zweiten optischen Mittel einen im parallelisierten Strahlenbüschel (94) angeordneten, vorzugsweise um eine außerhalb des parallelisierten Strahlenbüschels (94) liegende Achse (22) schwenkbaren Umlenkspiegel (23) zum Umlenken des vom zweiten Spiegelobjektiv (92a, 93a) in Richtung der Blendenöffnung (13) reflektierten Lichtes aufweisen.

13. Infrarot-Spektrometer nach einem der Ansprüche 10 bis 12, dadurch gekennzeichnet, daß das vom Umlenkspiegel (23) bzw. Strahlenteiler (93) umgelenkte Strahlenbüschel (24) über einen Kollimatorspiegel (25) auf einen Detektor (26) fokussiert wird.

14. Infrarot-Spektrometer nach einem der Ansprüche 1 bis 9, dadurch gekennzeichnet, daß in dem vom Spiegelobjektiv (16, 17) bzw. Linsensystem in Richtung der Blendenöffnung (13) reflektierten Strahlenbüschel (15) ein ringförmiger Spiegel (35) in einer zur Achse des Strahlenbüschels (15) geneigten Ebene angeordnet ist, wobei sich die spiegelnde Ringfläche des Ringspiegels (35) in einem Randbereich des Strahlenbüschels (15), dem Spiegelobjektiv (16, 17) bzw. Linsensystem zugewandt, befindet.

15. Infrarot-Spektrometer nach einem der Ansprüche 1 bis 8, dadurch gekennzeichnet, daß im Dunkelraum (49) des vom Spiegelobjektiv (16, 17) auf die Probe (20) fokussierten, torusartigen Strahlenbüschels (32) ein Umlenkspiegel (50) in einer zur Achse des Strahlenbüschels (32) geneigten Ebene angeordnet ist.

16. Infrarot-Spektrometer nach einem der Ansprüche 1 bis 15, dadurch gekennzeichnet, daß die zweiten optischen Mittel das von der Probe (20, 64) direkt reflektierte Licht erfassen.

17. Infrarot-Spektrometer nach einem der Ansprüche 1 bis 16, dadurch gekennzeichnet, daß die zweiten optischen Mittel das von der Probe (20, 64) diffus reflektierte Licht erfassen.

18. Infrarot-Spektrometer nach einem der Ansprüche 1 bis 17, dadurch gekennzeichnet, daß ferner vierte optische Mittel (81 bis 85) unterhalb der Probe (80) zum Erfassen des von der Probe (80) transmittierten Lichtes vorgesehen sind, vorzugsweise gleichzeitig mit der Erfassung des reflektierten Lichtes.

19. Infrarot-Spektrometer nach einem der Ansprüche 1 bis 18, dadurch gekennzeichnet, daß der Bereich (99) der Probe (20) endliche Abmessungen hat und auf einen Flächendetektor (97) mit einer Matrix (98) von Detektorelementen abgebildet wird, die integrierend oder selektiv mittels einer Auswerteinrichtung (32, 33) abfragbar sind.

20. Infrarot-Spektrometer nach Anspruch 19, dadurch gekennzeichnet, daß die von der Matrix (98) erfaßten Meßwerte gesamthaft oder ausschnittweise, auch mehrere diskret, auf einem Monitor darstellbar sind.

21. Infrarot-Spektrometer nach einem der Ansprüche 1 bis 20, dadurch gekennzeichnet, daß das von der Probe (20, 64) ausgehende Licht nach einem Verfahren der Fourier-Transformation (FT) ausgewertet wird.

**Revendications**

1. Spectromètre à infrarouges comportant des premiers moyens optiques (11, 14, 16, 17, 44, 81, 82, 92, 93, 92a, 93a) pour la focalisation d'un faisceau de lumière infrarouge (12, 15, 34, 40, 45, 91, 94) sur une zone au moins approximativement de forme ponctuelle (19; 46; 99) d'un échantillon (20; 80), et des seconds moyens optiques (16, 17, 23, 25, 35, 44, 48, 50, 52, 92, 93a) pour la focalisation du faisceau de lumière infrarouge (12, 15, 36, 47, 51) réfléchi par l'échantillon (20, 80) sur un détecteur (26, 38, 53, 97) relié à une unité de transformation de Fourier (32), caractérisé en ce qu'il est prévu une source (18) de lumière visible dirigée sur l'échantillon (20, 80) et en ce qu'il est prévu des troisièmes moyens optiques (27, 28, 29, 30, 31), qui comportent un miroir de déviation (28, 30, 31), pouvant être engagé dans le faisceau lumineux (12, 15) réfléchi par l'échantillon (20, 80) et qui produisent, dans sa position d'engagement, une image de la zone de forme ponctuelle (19, 46, 99) dans un oculaire (29).

2. Spectromètre à infrarouges selon la revendication 1, caractérisé en ce qu'une image d'un foyer intermédiaire est formée sur l'échantillon (20, 64).

3. Spectromètre à infrarouges selon la revendication 2, caractérisé en ce qu'une ouverture de diaphragme réglable (13) est située dans la position du foyer intermédiaire.

4. Spectromètre à infrarouges selon une des revendications 2 ou 3, caractérisé en ce que les premiers moyens optiques comportent un miroir collimateur (11) pour focaliser sur le foyer intermédiaire la lumière provenant d'une source lumineuse (10) et entrant parallèlement.

5. Spectromètre à infrarouges selon une des revendications 2 à 4, caractérisé en ce qu'au moins les premiers moyens optiques comportent en outre un système optique à miroir, notamment un objectif à miroir (16, 17; 60, 61) pour la focalisation sur l'échantillon (20) du faisceau divergent de rayons (15) sortant par l'ouverture (3) de diaphragme (13).

6. Spectromètre à infrarouges selon une des revendications 2 à 4, caractérisé en ce qu'au moins les premiers moyens optiques comprennent en outre un système à lentilles pour la focalisation sur l'échantillon (20) du faisceau divergent de rayons (15) sortant par l'ouverture de diaphragme (13).

7. Spectromètre à infrarouges selon une des revendications 1 à 6, caractérisé en ce que l'axe du faisceau de rayons arrivant sur l'échantillon (20) est orienté sensiblement perpendiculairement à la surface de l'échantillon.

8. Spectromètre à infrarouges selon une des revendications 1 à 6, caractérisé en ce que l'axe du faisceau de rayons arrivant sur l'échantillon (20) est orienté sensiblement avec inclinaison par rapport à la surface de l'échantillon.

9. Spectromètre à infrarouges selon une des revendications 5 à 8, caractérisé en ce que certains des premiers moyens optiques servent simultanément de seconds moyens optiques, notamment par le fait que la lumière réfléchie par la surface de l'échantillon est reçue par le même objectif à miroir (16, 17) ou le même système à lentilles qui sert à la focalisation sur l'échantillon (20) du faisceau de rayons (15) sortant de l'ouverture de diaphragme (13).

10. Spectromètre à infrarouges selon une des revendications 1 à 9, caractérisé en ce que les seconds moyens optiques comportent un miroir de renvoi (23), disposé en arrière de l'ouverture de diaphragme (13), pouvant pivoter de préférence autour d'un axe (22) placé à l'extérieur du faisceau divergent de rayons (15), en vue du renvoi de la lumière réfléchie par l'objectif à miroir (16, 17) ou le système à lentilles dans la direction de l'ouverture de diaphragme (13).

11. Spectromètre à infrarouges selon une des revendications 1 à 9, caractérisé en ce que les seconds moyens optiques comportent un diviseur de rayonnement (96), disposé en arrière de l'ouverture de diaphragme (13), pouvant pivoter de préférence autour d'un axe (15) placé à l'extérieur du faisceau divergent de rayons (15), en vue du renvoi de la lumière réfléchie par l'objectif à miroir (16, 17) ou du système à lentilles en direction de l'ouverture de diaphragme (13).

12. Spectromètre à infrarouges selon une des revendications 5 à 9, caractérisé en ce que le système optique à miroir des premiers moyens optiques comporte un premier objectif à miroir (92, 93) pour orienter parallèlement le faisceau divergent de rayons (91) sortant de l'ouverture de diaphragme (13) ainsi qu'un second objectif à miroir (92a, 93a) pour focaliser le faisceau de rayons rendus parallèles et en ce que les seconds moyens optiques comportent un miroir de renvoi (23), disposé dans le faisceau de rayons rendus parallèles (94) et pouvant pivoter de préférence autour d'un axe (22) placé à l'extérieur du faisceau de rayons rendus parallèles (94) en vue d'un renvoi de la lumière réfléchie par le second objectif à miroir (92a, 93a) en direction de l'ouverture de diaphragme (13).

13. Spectromètre à infrarouges selon une des revendications 10 à 12, caractérisé en ce que le faisceau de rayons (24) renvoyé par le miroir de renvoi (23) ou le diviseur de rayonnement (93) est focalisé sur un détecteur (26) par l'intermédiaire d'un miroir collimateur (25).

14. Spectromètre à infrarouges selon une des revendications 1 à 9, caractérisé en ce qu'il est prévu dans le faisceau de rayons (15) reflechis par l'objectif à miroir (16, 17) ou le système à lentilles dans la direction de l'ouverture de diaphragme (13), un miroir (35) de forme annulaire dans un plan incliné par rapport à l'axe du faisceau de rayons (15), la surface annulaire réfléchissante du miroir annulaire (35) étant située dans une zone marginale du faisceau de rayons (15), qui est dirigée vers l'objectif à miroir (16, 17) ou le système à lentilles.

15. Spectromètre à infrarouges selon une des revendications 1 à 8, caractérisé en ce qu'il est prévu dans le volume d'ombre (49) du faisceau de rayons (32) en forme de tore qui a été focalisé par l'objectif à miroir (16, 17) sur l'échantillon (20) un miroir de renvoi (50) dans un plan incliné par rapport à l'axe du faisceau de rayons (32).

16. Spectromètre à infrarouges selon une des revendications 1 à 15, caractérisé en ce que les seconds moyens optiques captent la lumière réfléchie directement par l'échantillon (20, 64).

17. Spectromètre à infrarouges selon une des revendications 1 à 16, caractérisé en ce que les seconds moyens optiques captent la lumière réfléchie de façon diffuse par l'échantillon (20, 64).

18. Spectromètre à infrarouges selon une des revendications 1 à 17, caractérisé en ce qu'il est prévu en outre des quatrièmes moyens optiques (81, 85) en dessous de l'échantillon (80) pour capter la lumière transmise par l'échantillon (80), de préférence en même temps que le captage de la lumière réfléchie.

19. Spectromètre à infrarouges selon une des revendications 1 à 18, caractérisé en ce que la zone (99) de l'échantillon (20) a des dimensions finies et forme une image sur un détecteur de surface (97) au moyen d'une matrice (98) d'éléments détecteurs qui peuvent être interrogés de façon intégrée ou sélective à l'aide d'un dispositif d'évaluation (32, 33).

20. Spectromètre à infrarouges selon la revendication 19, caractérisé en ce que les valeurs de mesure captées par la matrice (98) peuvent être affichées en totalité ou également partiellement, et également plusieurs de façon discrète, sur un moniteur.

21. Spectromètre à infrarouges selon une des revendications 1 à 20, caractérisé en ce que la lumière provenant de l'échantillon (20, 64) est traitée conformément à un procédé de transformation de Fourier (FT).

**Claims**

1. An infrared spectrometer having first optical means (11, 14, 16, 17, 44, 81, 82, 92, 93, 92a, 93a) for focussing a beam of infrared light (12, 15, 34, 40, 45, 91, 94) on an at least approximately punctiform region (19; 46; 99) of a specimen (20; 80) and having second optical means (16, 17, 23, 25, 35, 44, 48, 50, 52, 92a, 93a) for focussing the beam of infrared light (12, 15, 36, 47, 51) reflected from the specimen (20, 80) on a detector (26, 38, 53, 97) connected to a Fourier transform unit (32), characterised in that a source (18) of visible light directed onto the specimen (20, 80) is provided and that third optical means (27, 28, 29, 30, 31) are provided which comprise a deflecting mirror (28, 30, 31) which can be inserted in the beam of light (12, 15) reflected from the specimen (20, 80) and, in the inserted position of the mirror, form the image of the punctiform region (19, 46, 99) in an eyepiece (29).

2. An infrared spectrometer according to Claim 1, characterised in that an intermediate focal point is reproduced on the specimen (20, 64).

3. An infrared spectrometer according to Claim 2, characterised in that there is an adjustable diaphragm aperture (13) at the position of the intermediate focal point.

4. An infrared spectrometer according to Claim 2 or 3, characterised in that the first optical means comprise a collimator mirror (11) for focussing the light coming from a light source (10) and entering parallel, onto the intermediate focal point.

5. An infrared spectrometer according to any one of Claims 2 to 4, characterised in that at least the first optical means further comprise a mirror optical system, particularly a reflecting objective (16, 17; 60, 61) for focussing the diverging pencil of rays (15) emerging from the diaphragm aperture (13) on the specimen (20).

6. An infrared spectrometer according to any one of Claims 2 to 4, characterised in that at least the first optical means further comprise a lens system for focussing the diverging bundle of rays (15) emerging from the diaphragm aperture (13) on the specimen (20).

7. An infrared spectrometer according to any one of Claims 1 to 6, characterised in that the axis of the pencil of rays impinging on the specimen (20) extends substantially at right angles to the surface of the specimen.

8. An infrared spectrometer according to any one of Claims 1 to 6, characterised in that the axis of the pencil of rays impinging on the specimen (20) extends substantially at an oblique angle to the surface of the specimen.

9. An infrared spectrometer according to any one of Claims 5 to 8, characterised in that some of the first optical means simultaneously serve as second optical mesns, and, in particular, that the light reflected from the surface of the specimen is collected by the same reflecting objective (16, 17) or lens system as that which serves to focus the pencil of rays (15) emerging from the diaphragm aperture (13) on the specimen (20).

10, An infrared spectrometer according to any one of Claims 1 to 9, characterised in that the second optical means comprise a deviation mirror (23) which is disposed behind the diaphragm aperture (13) and is preferably pivotable about an axis (22) situated outside the diverging pencil of rays (15), to deflect the light reflected from the reflecting objective (16, 17) or lens system in the direction of the diaphragm aperture (13).

11. An infrared spectrometer according to any one of Claims 1 to 9, characterised in that the second optical means comprise a beam splitter (96) which is disposed behind the diaphragm aperture (13) and is preferably pivotable about an axis (95) situated outside the diverging pencil of rays (15) to deflect the light reflected from the reflecting objective (16, 17) or lens system in the direction of the diaphragm aperture (13).

12. An infrared spectrometer according to any one of Claims 5 to 9, characterised in that the mirror optical system of the first optical means comprise a first reflecting objective (92, 93) for the parallelization of the diverging pencil of rays (91) emerging from the diaphragm aperture (13) and a second reflecting objective (92a, 93a) for focussing the parallelized pencil of rays (94) and that the second optical means comprise a deviation mirror (23) which is disposed in the parallelized pencil of rays (94) and is preferably pivotable about an axis (22) situated outside the parallelized pencil of rays (94) to deflect the light reflected from the second reflecting objective (92a, 93a) in the direction of the diaphragm aperture (13).

13. An infrared spectrometer according to any one of Claims 10 to 12, characterised in that the pencil of rays (24) deflected by the deviation mirror (23) or beam splitter (93) is focussed on a detector (26) via a collimator mirror (25).

14. An infrared spectrometer according to any one of Claims 1 to 9, characterised in that an annular mirror (35) ia disposed in the pencil of rays (15) reflected by the reflecting objective (16, 17) or lens system in the direction of the diaphragm aperture (13), in a plane which is inclined in relation to the axis of the pencil of rays (15), the specular annular surface of the annular mirror (35) being in a marginal region of the pencil of rays (15), facing the reflecting objective (16, 17) or lens system.

15. An infrared spectrometer according to any one of Claims 1 to 8, characterised in that, in the dark space (49) of the toroidal pencil of rays (32) focussed on the specimen (20) by the reflecting objective (16, 17), a deviation mirror (50) is disposed in a plane inclined in relation to the axis of the pencil of rays (32).

16. An infrared spectrometer according to any one of Claims 1 to 15, characterised in that the second optical means detect the light reflected directly from the specimen (20, 64).

17. An infrared spectrometer according to any one of Claims 1 to 16, characterised in that the second optical means detect the light reflected diffusely from the specimen (20, 64).

18. An infrared spectrometer according to any one of Claims 1 to 17, characterised in that furthermore, fourth optical means (81 to 85) are provided below the specimen (80) to detect the light transmitted by the specimen (80), preferably simultaneously with the detection of the reflected light.

19. An infrared spectrometer according to any one of Claims 1 to 18, characterised in that the region (99) of the specimen (20) has finite dimensions and is reproduced on an area detector (97) with a matrix (98) of detector elements which can be interrogated in an integrating or selective manner by means of an evaluation device (32, 33).

20. An infrared spectrometer according to Claim 19, characterised in that the measured values detected by the matrix (98) can be represented on a mcnitor, as a whole or partially, including a plurality discretely.

21. An infrared spectrometer according to any one of Claims 1 to 20, characterised in that the light originating from the specimen (20, 64) is evaluated by a Fournier transform (FT) method.

Fig.1

Fig. 2

Fig. 3

Fig. 4

Fig. 5

Fig. 6

Fig. 7

Fig. 8

Fig.9

Fig. 10 a.)

b.)